# EUROPEAN PATENT APPLICATION

(11) **EP 4 578 675 A1**
(43) Date of publication of application: **02.07.2025**
(21) Application number: 24197215.7
(22) Date of filing: 29.08.2024
(51) Int. Cl.: B60H 1/00, B60H 1/32

(54) **THERMAL MANAGEMENT SYSTEM AND ELECTRIC DEVICE**

(30) Priority: 28.12.2023 CN 202311843546
(71) Applicant: Xiaomi EV Technology Co., Ltd., 100176 Beijing (CN)
(72) Inventor: ZHANG, Yingwen, Beijing, 100176 (CN); GUAN, Tao, Beijing, 100176 (CN); SHUAI, Ou, Beijing, 100176 (CN)
(74) Representative: Stöckeler, Ferdinand

(57) **Abstract**

A thermal management system which includes: a multi-way valve (10), and a battery pack loop (L1), a plate heat exchanger loop (L2), a low-temperature radiator loop (L3), an electric drive loop (L4), and an air conditioner loop (L5) respectively connected to different connectors of the multi-way valve. At least two of the different connectors of the multi-way valve are selectively communicated to perform a heat exchange of heat exchange media between at least two of the battery pack loop (L1), the plate heat exchanger loop (L2), the low-temperature radiator loop (L3), the electric drive loop (L4), and the air conditioner loop (L5), or perform a heat homogenization of a heat exchange medium of one of the battery pack loop (L1), the plate heat exchanger loop (L2), the low-temperature radiator loop (L3), the electric drive loop (L4), and the air conditioner loop (L5).

## Description

### TECHNICAL FIELD

The invention relates to the technical field of thermal management, in particular to a thermal management system and an electric device.

### BACKGROUND OF THE INVENTION

With the popularization of new energy vehicles, especially in a use scenario of a pure electric vehicle, the vehicle's battery capacity, charging rate, electric drive power, etc. are rapidly developing. Accordingly, thermal management needs are higher and higher, and the requirements for a heating rate, cooling capacity, and heat exchange efficiency have been improved dramatically. An existing thermal management system cannot meet needs of many aspects at the same time, and has a complex structure and low integration level, which cannot ensure efficiency.

### SUMMARY OF THE INVENTION

To overcome problems existing in the related art, the invention provides a thermal management system and an electric device using the same.

According to a first aspect of an example of the invention, a thermal management system is provided, including:
a multi-way valve; and
a battery pack loop, a plate heat exchanger loop, a low-temperature radiator loop, an electric drive loop, and an air conditioner loop respectively connected to different connectors of the multi-way valve.

At least two of the different connectors of the multi-way valve are selectively communicated to perform a heat exchange of heat exchange media between at least two of the battery pack loop, the plate heat exchanger loop, the low-temperature radiator loop, the electric drive loop, and the air conditioner loop, or perform a heat homogenization of a heat exchange medium of one of the battery pack loop, the plate heat exchanger loop, the low-temperature radiator loop, the electric drive loop, and the air conditioner loop.

In some examples, the thermal management system includes a heat mixing module connected between the multi-way valve and the air conditioner loop. The heat mixing module and the multi-way valve are together configured to: selectively enable all or part of a heat exchange medium in the air conditioner loop to flow into other loops to perform a heat exchange.

In some examples, the heat mixing module and the multi-way valve are together configured to: selectively enable the heat exchange medium in the air conditioner loop to flow into the battery pack loop, so that a temperature difference between heat exchange media in the air conditioner loop and in the battery pack loop is within a first predetermined range.

In some examples, the heat mixing module and the multi-way valve are together configured to: selectively enable the heat exchange medium in the air conditioner loop to flow into the electric drive loop, so that a temperature difference between heat exchange media in the air conditioner loop and in the electric drive loop is within a second preset range.

In some examples, the multi-way valve and the heat mixing module are together configured to: selectively enable a heat exchange medium in a liquid cooling condenser in the air conditioner loop to flow into the low-temperature radiator loop.

In some examples, the heat mixing module includes a three-way control valve, a first communicating valve, a second communicating valve, and a third communicating valve connected sequentially through pipelines. The first communicating valve, the second communicating valve, and the third communicating valve are three-way valves respectively. The three-way control valve and the first communicating valve are connected into the air conditioner loop, the second communicating valve is connected to the first connector of the multi-way valve, and the third communicating valve is connected to the second connector of the multi-way valve.

In some examples, the air conditioner loop is circulated separately when a port I and a port III of the three-way control valve communicate and a port II is cut off.

All the heat exchange medium in the air conditioner loop flows into other loops through the heat mixing module to perform a heat exchange when the port I and the port II of the three-way control valve communicate and the port III is cut off.

Part of the heat exchange medium in the air conditioner loop flows into other loops through the heat mixing module to perform a heat exchange when all the port I, the port II, and the port III of the three-way control valve communicate.

In some examples, the multi-way valve has a third connector and a fourth connector. The battery pack loop includes a battery pack, a pipeline for connecting the fourth connector and the battery pack, and a pipeline for connecting the third connector and the battery pack. A first water pump is further arranged in the battery pack loop.

In some examples, the multi-way valve has a fifth connector and a sixth connector. The plate heat exchanger loop includes a plate heat exchanger, a pipeline for connecting the fifth connector and the plate heat exchanger, and a pipeline for connecting the sixth connector and the plate heat exchanger.

In some examples, the thermal management system has at least one of the following operating modes:
a first operating mode, where the third connector and the fourth connector communicate, and heat homogenization is performed by a heat exchange medium in the battery pack; or
a second operating mode, where the third connector and the sixth connector communicate, the fourth connector and the fifth connector communicate, and the heat exchange medium in the battery pack flows into the plate heat exchanger to dissipate heat and then flows back to the battery pack.

In some examples, the multi-way valve has a seventh connector and an eighth connector. The low-temperature radiator loop includes a low-temperature radiator, a pipeline for connecting the seventh connector and the low-temperature radiator, and a pipeline for connecting the eighth connector and the low-temperature radiator.

In some examples, the multi-way valve is a nine-way valve. The battery pack loop, the plate heat exchanger loop, and the air conditioner loop are each connected to two connectors of the nine-way valve. The low-temperature radiator loop and the electric drive loop are each connected to one connector of the nine-way valve and share one connector.

In some examples, the multi-way valve has a ninth connector. The electric drive loop includes an electric drive assembly, a pipeline for connecting the ninth connector and the electric drive assembly, and a pipeline for connecting the electric drive assembly to the pipeline. A second water pump is further arranged in the electric drive loop.

In some examples, the air conditioner loop includes a compressor, the liquid cooling condenser, a heater, an air conditioner box, and the plate heat exchanger. A water outlet of the liquid cooling condenser communicates with the port I of the three-way control valve through a pipeline, a water inlet of the liquid cooling condenser communicates with the second communicating valve through a pipeline. A third water pump is further arranged in the air conditioner loop.

In some examples, the thermal management system has at least one of the following operating modes:
a third operating mode, where the ninth connector and the eighth connector communicate, and heat homogenization is performed by a heat exchange medium in the electric drive assembly;
a fourth operating mode, where the ninth connector and the seventh connector communicate, and the heat exchange medium in the electric drive assembly flows into the low-temperature radiator to dissipate heat and then flows back to the electric drive assembly; or
a fifth operating mode, where the fourth connector and the seventh connector communicate, the third connector and the ninth connector communicate, and heat exchange media in the battery pack and in the electric drive assembly both flow into the low-temperature radiator to perform cooling.

In some examples, the thermal management system has at least one of the following operating modes:
a sixth operating mode, where the fourth connector and the eighth connector communicate, the third connector and the ninth connector communicate, and the battery pack is heated by waste heat of the electric drive assembly.

In some examples, the thermal management system has at least one of the following operating modes:
a seventh operating mode, where the sixth connector and the eighth connector communicate, the fifth connector and the ninth connector communicate, and heat of the electric drive assembly is recovered by the plate heat exchanger;
an eighth operating mode, where the sixth connector and the seventh connector communicate, the fifth connector and the ninth connector communicate, and both ambient heat absorbed by the low-temperature radiator and the waste heat of the electric drive assembly are transferred to the plate heat exchanger;
a ninth operating mode, where the first connector and the seventh connector communicate, the second connector and the ninth connector communicate, a heat exchange medium of the electric drive assembly flows into the low-temperature radiator to perform cooling, and the heat exchange medium of the liquid cooling condenser in the air conditioner loop is selectively connected into the low-temperature radiator to perform cooling; or
a tenth operating mode, where the first connector and the third connector communicate, the fourth connector and the second connector communicate, the fifth connector and the ninth connector communicate, the sixth connector and the eighth connector communicate, and heat generated by the electric drive assembly, the compressor and the heater of the air conditioner loop are transferred to the battery pack.

In some examples, the multi-way valve includes a shell and a valve spool arranged in the shell, the plurality of connectors are formed on the shell, and the valve spool is capable of rotating to connect at least two of the connectors.

In some examples, the thermal management system further includes a storage tank, and at least one liquid replenishment pipeline and/or at least one gas replenishment pipeline connected to the storage tank.

In some examples, the two liquid replenishment pipelines are arranged, a water outlet of the first liquid replenishment pipeline is connected to an inlet of the first water pump in the battery pack loop, and a water outlet of the second liquid replenishment pipeline is connected upstream of the second water pump in the electric drive loop.

In some examples, two gas replenishment pipelines are arranged, a gas outlet of the first gas replenishment pipeline is connected to an outlet of the electric drive assembly in the electric drive loop, and a gas outlet of the second gas replenishment pipeline is connected to an outlet of the plate heat exchanger in the plate heat exchanger loop.

In some examples, the plurality of loops are respectively formed by runners of a runner plate, and the liquid replenishment pipeline and/or the gas replenishment pipeline are/is formed by part of the runners of the runner plate.

According to a second aspect of examples of the invention, an electric device is provided and includes the above thermal management system.

A technical solution provided by the examples of the invention may include the following beneficial effects. The multi-way valve is controlled, thus heat exchange media from the battery pack, an electric drive, the air conditioner and a cooling module are managed, and efficient interaction of the battery pack, the electric drive assembly, the plate heat exchanger, the low-temperature radiator, and the air conditioner is realized. The heat exchange is enabled among the plurality of loops that are in different temperature intervals, heat exchange efficiency is promoted, so that the system is in an efficient operation state, and at the same time an integration level of the system is improved. In addition, through the thermal management system, an internal temperature equalization control of one single loop can be further realized, an internal temperature difference is equalized, and component operation efficiency is promoted.

It is to be understood that above general descriptions and later detailed descriptions are merely examples and illustrative, and cannot limit the invention.

### BRIEF DESCRIPTION OF DRAWINGS

Accompanying drawings here are incorporated into the specification, constitute a part of the specification, show examples consistent with the invention, and are used for explaining a principle of the invention together with the specification.
FIG. 1 and FIG. 2 are structural block diagrams of a thermal management system illustrated according to an example.
FIG. 3 is a flow path diagram of a heat exchange medium in a first operating mode of a thermal management system provided by the invention.
FIG. 4 is a flow path diagram of a heat exchange medium in a third operating mode of a thermal management system provided by the invention.
FIG. 5 is a flow path diagram of a heat exchange medium in a second operating mode of a thermal management system provided by the invention.
FIG. 6 and FIG. 7 are flow path diagrams of a heat exchange medium in a temperature difference balancing mode of a thermal management system provided by the invention.
FIG. 8 is a flow path diagram of a heat exchange medium in a fourth operating mode of a thermal management system provided by the invention.
FIG. 9 is a flow path diagram of a heat exchange medium in a fifth operating mode of a thermal management system provided by the invention.
FIG. 10 is a flow path diagram of a heat exchange medium in a sixth operating mode of a thermal management system provided by the invention.
FIG. 11 and FIG. 12 are flow path diagrams of a heat exchange medium in a seventh operating mode of a thermal management system provided by the invention.
FIG. 13 and FIG. 14 are flow path diagrams of a heat exchange medium in an eighth operating mode of a thermal management system provided by the invention.
FIG. 15 and FIG. 16 are flow path diagrams of a heat exchange medium in a ninth operating mode of a thermal management system provided by the invention.

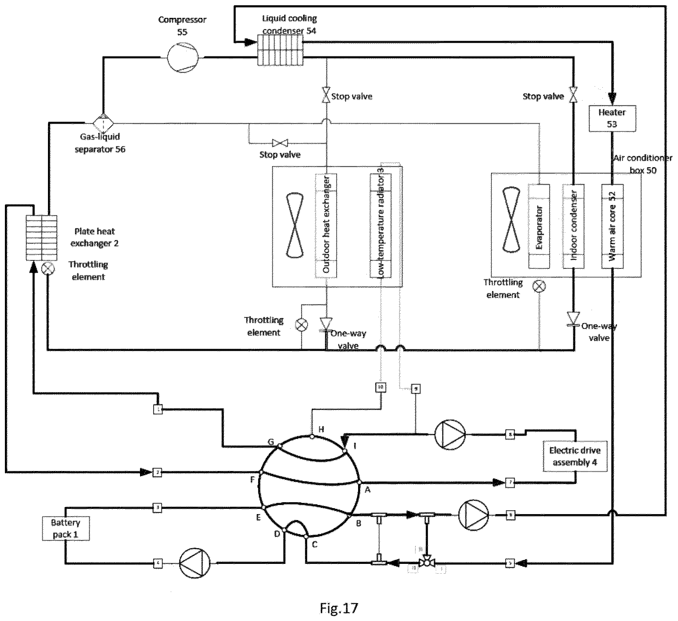

FIG. 17 is a flow path diagram of a heat exchange medium in a tenth operating mode of a thermal management system provided by the invention.
FIG. 18 is a structural block diagram of a thermal management system illustrated according to another example.

### DETAILED DESCRIPTION OF THE INVENTION

Examples will be illustrated in detail here, and their instances are shown in accompanying drawings. When the following description refers to the accompanying drawings, unless otherwise indicated, the same numbers in different accompanying drawings indicate the same or similar elements. Embodiments described in the following examples do not represent all possible embodiments consistent with the invention. Rather, they are merely instances of apparatuses and methods consistent with some aspects of the invention as detailed in the appended claims.

It needs to be noted that all actions of acquiring signals, information or data in the invention are performed in compliance with corresponding data protection regulations and policies of the country in which they are located, and with authorization granted by owners of corresponding apparatuses.

In the disclosure, in the absence of a contrary indication, terms such as "upstream", "downstream", "inlet", "entrance", and "outlet" are used for flow directions of heat exchange media in different loops, with specific reference to directions shown by arrows in the different accompanying drawings, and "internal" and " external" usually refer to the inside and outside of contours of corresponding components. The use of terms "first", "second", etc. is intended to distinguish between the different components and does not have a sequence or significance. In addition, in the following description, when the accompanying drawings are involved, unless otherwise indicated, the same reference numerals in different drawings indicate the same or similar elements.

In a related example of the invention, a thermal management system has a large integrated design for a refrigerant system and a coolant system. A compressor triangle cycle is adopted during low-temperature heating, efficiency is low, and an air conditioner loop is not configured with an independent heater, which cannot realize rapid heating at a low temperature. Indirect condensation is adopted during cooling, and cooling efficiency of the system is low. In another related example of the invention, an indirect heat pump is low in efficiency and low in integration level. In another related example of the invention, an air conditioner adopts an air-heating heater, which is poorly coupled to battery heating, and cannot realize the coexistence of an indirect heat pump and a direct heat pump.

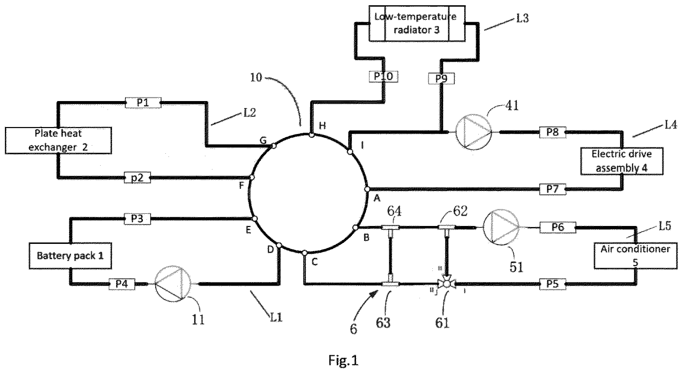

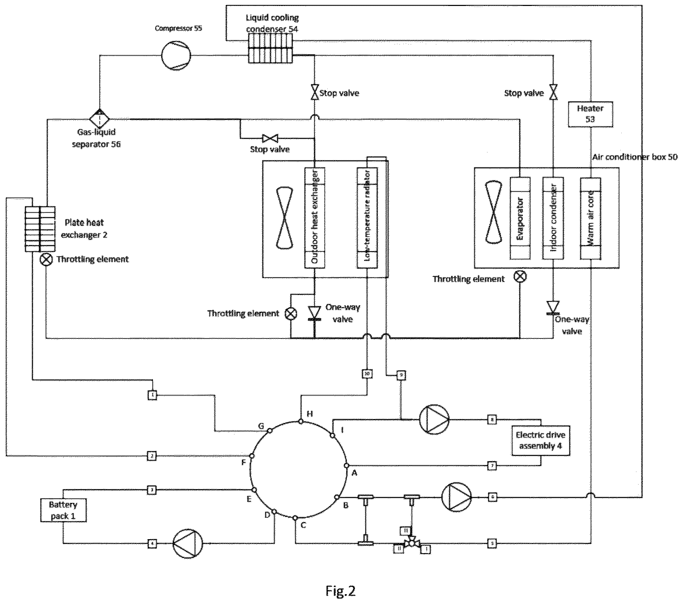

As shown in FIG. 1 and FIG. 2, the invention provides a thermal management system including a multi-way valve 10, and a battery pack loop L1, a plate heat exchanger loop L2, a low-temperature radiator loop L3, an electric drive loop L4, and an air conditioner loop L5 respectively connected to different connectors A, B, C, D, E, F, G, H, and I of the multi-way valve 10. At least two of the different connectors of the multi-way valve 10 are selectively communicated to perform a heat exchange of heat exchange media between at least two of the battery pack loop L1, the plate heat exchanger loop L2, the low-temperature radiator loop L3, the electric drive loop L4, and the air conditioner loop L5, or perform a heat homogenization of a heat exchange medium of one of the battery pack loop L1, the plate heat exchanger loop L2, the low-temperature radiator loop L3, the electric drive loop L4, and the air conditioner loop L5.

Here, it needs to be noted that the heat exchange medium may be a coolant that plays a cooling role, may be cold water, may be hot water that plays a heating role, and may be a coolant in the air conditioner loop, which may be generalized as a heat exchange medium. In the invention, the number of the connectors of the multi-way valve 10 may be designed as needed. For example, the multi-way valve 10 may be a ten-way valve, and five loops each occupy two connectors, one inlet and one outlet. Certainly, the multi-way valve 10 may also be a nine-way valve as shown in the figure. Two of the loops share one connector. For example, the electric drive loop L4 and the low-temperature radiator loop L3 share the eighth connector I. Certainly, the multi-way valve 10 may also be disassembled into an eight-way valve and a three-way valve. The seventh connector H and the eighth connector I may be used as two connectors of the three-way valve. The other connector of the three-way valve is shared with the eight-way valve. That is, on the basis of the example shown in the figure, one three-way valve is added, so that the seventh connector H and the eighth connector I are merged into one connector. Motors are arranged for the eight-way valve and the added three-way valve respectively in a form of dual motors. All fall within the scope of protection of the invention.

In the thermal management system provided by the invention, the multi-way valve 10 is controlled, thus heat exchange media from the battery pack 1, an electric drive assembly 4, an air conditioner 5, and a cooling module (a low-temperature radiator 3 and a plate heat exchanger 2) are managed, and efficient interaction of the battery pack 1, the electric drive assembly 4, the plate heat exchanger 2, the low-temperature radiator 3, and the air conditioner 5 is realized. The heat exchange is performed between the plurality of loops that are in different temperature intervals, heat exchange efficiency is promoted, so that the system is in an efficient operation state, and at the same time an integration level of the system is improved. In addition, through the thermal management system, an internal temperature equalization control of one single loop can be further realized, an internal temperature difference is equalized, and component operation efficiency is promoted.

FIG. 1 shows a part of a structure in the example shown in FIG. 2. FIG. 1 is a simplification of a structure in the air conditioner loop L5 in FIG. 2. As shown in FIG. 2, when cooling is performed by the air conditioner, a gas after a gas-liquid separation enters a compressor 55 to compress a low-temperature low-pressure gaseous refrigerant to form a high-temperature high-pressure gaseous refrigerant. At a liquid cooling condenser 54, heat is exchanged into the coolant, and the refrigerant becomes a high-temperature high-pressure liquid refrigerant, which is throttled through an electronic expansion valve of the plate heat exchanger 2 to become a low-temperature low-pressure gas-liquid two-phase refrigerant, which absorbs heat in the plate heat exchanger 2 to become a low-temperature low-pressure gaseous refrigerant, which returns to the compressor 55. A separated liquid directly enters an evaporator to perform evaporation and heat absorption, and returns to the compressor 55 through the plate heat exchanger 2 to complete a cooling operation for a passenger compartment.

When heating is performed by the air conditioner, the compressor 55 compresses the low-temperature low-pressure gaseous refrigerant to form a high-temperature high-pressure gaseous refrigerant. At the liquid cooling condenser 54, heat is exchanged into the coolant. The refrigerant becomes a high-temperature high-pressure liquid refrigerant, which enters an indoor condenser and releases heat to complete heating of the passenger compartment, and part of the liquid refrigerant passing through the liquid cooling condenser 54 may enter the heater 53 to be heated and then enters a warm air core 52 to participate in the heating of the air conditioner.

The interaction between different loops in the thermal management system provided by the invention is described in detail below in conjunction with the accompanying drawings. Appropriate combinations may be made among a plurality of operating modes described below. The thermal management system has at least one of the following operating modes.

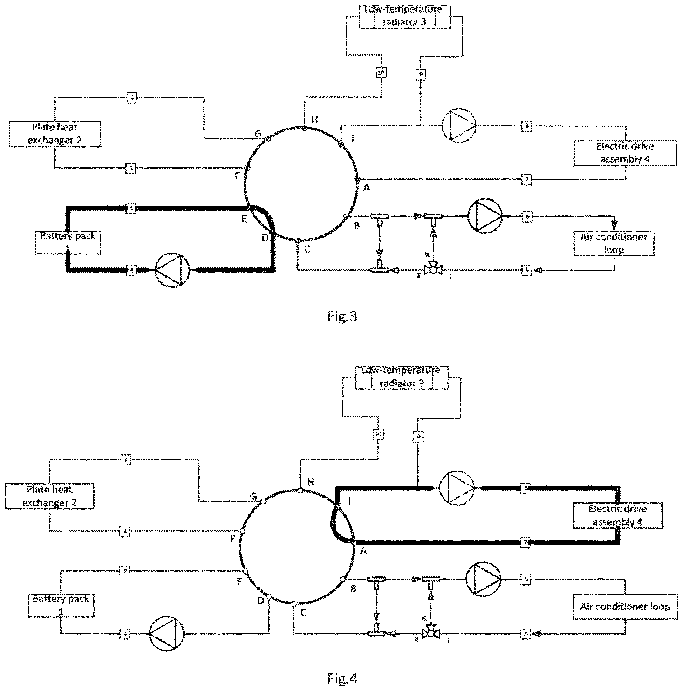

As shown in FIG. 1, the multi-way valve 10 has a third connector D and a fourth connector E. The battery pack loop L1 includes a battery pack 1, a pipeline P3 for connecting the fourth connector E and the battery pack 1, a pipeline P4 for connecting the third connector D and the battery pack 1, and a first water pump 11 arranged on the pipeline P4. Certainly, the first water pump 11, and a second water pump 41 and a third water pump 51 to be described in the below are not limited to being arranged on a certain pipeline, as long as they are arranged in the corresponding circulating loop. The first water pump 11 is arranged in the battery pack loop L1, the second water pump 41 is arranged in the electric drive loop L4, and the third water pump 51 is arranged in the air conditioner loop L5. As shown in FIG. 3, the thermal management system provided by the invention has a first operating mode. The third connector D and the fourth connector E communicate. Heat homogenization is performed by a heat exchange medium in the battery pack 1. In the first operating mode and multiple operating modes described below, connectors not mentioned are not communicated. The operating mode is in consideration of the fact that when the battery pack 1 operates or is charged, heat exchange capabilities of a middle position and two end positions are different, and thus uneven temperatures in various parts of the battery pack 1 are caused. It may play a role in equalizing a temperature difference in the battery pack 1 by making the heat exchange medium in the battery pack 1 flow.

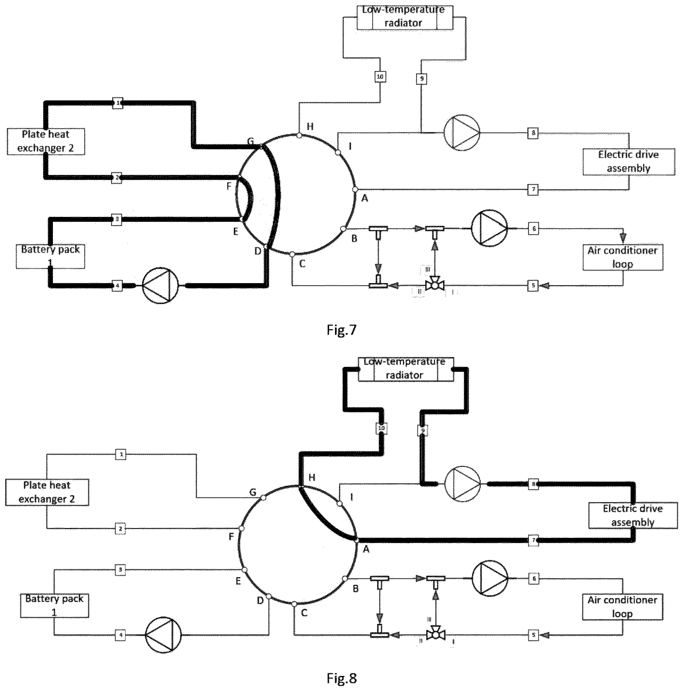

Further, as shown in FIG. 1, in order to realize cooling of the battery pack 1 in summer and recycling of heat of the battery pack 1 during fast charging of the battery pack 1, in the invention, the multi-way valve 10 has a fifth connector F and a sixth connector G. The plate heat exchanger loop L2 includes the plate heat exchanger 2, a pipeline P2 for connecting the fifth connector F and the plate heat exchanger 2, and a pipeline P1 for connecting the sixth connector G and the plate heat exchanger 2. As shown in FIG. 7, the thermal management system provided by the invention has a second operating mode. The third connector D and the sixth connector G communicate. The fourth connector E and the fifth connector F communicate. The heat exchange medium in the battery pack 1 flows into the plate heat exchanger 2 to dissipate heat and then flows back to the battery pack 1. The battery pack 1 dissipates heat through the plate heat exchanger 2 to ensure a cooling effect on the battery pack 1.

As shown in FIG. 1, the multi-way valve 10 has a seventh connector H and an eighth connector I. The low-temperature radiator loop L3 includes the low-temperature radiator 3, a pipeline P10 for connecting the seventh connector H and the low-temperature radiator 1, and a pipeline P9 for connecting the eighth connector I and the low-temperature radiator 1.

As mentioned above, the multi-way valve 10 may be a nine-way valve. The battery pack loop L1, the plate heat exchanger loop L2, and the air conditioner loop L5 are each connected to two connectors of the nine-way valve, and the low-temperature radiator loop L3 and the electric drive loop L4 are each connected to one connector of the nine-way valve and share one connector. As shown in FIG. 1, the multi-way valve 10 has a ninth connector A. The electric drive loop L4 includes an electric drive assembly 4, a pipeline P7 for connecting the ninth connector A and the electric drive assembly 4, and a pipeline P8 for connecting the electric drive assembly 4 to the pipeline P9. The second water pump 41 is arranged on the pipeline P8. The low-temperature radiator loop L3 and the electric drive loop L4 share the eighth connector I. In other examples, any suitable two of the above multiple circulating loops could be selected to share one connector.

As shown in FIG. 4, the thermal management system provided by the invention has a third operating mode. The ninth connector A and the eighth connector I communicate, heat homogenization is performed by the heat exchange medium in the electric drive assembly 4, thus a self-circulation of the electric drive loop L4 is realized, heat storage of the electric drive loop L4 is realized at a low temperature, and the operation efficiency of the electric drive assembly 4 is promoted.

As shown in FIG. 8, the thermal management system provided by the invention has a fourth operating mode. The ninth connector A and the seventh connector H communicate. The heat exchange medium in the electric drive assembly 4 flows into the low-temperature radiator 3 to dissipate heat and then flows back to the electric drive assembly 4. The electric drive assembly 4 is cooled by the low-temperature radiator 3 to ensure that the temperature of the electric drive assembly 4 can meet operating requirements.

As mentioned above, the air conditioner loop L5 may include the compressor 55, the liquid cooling condenser 54, the heater 53, an air conditioner box 50, and the plate heat exchanger 2. As shown in FIG. 1 and FIG. 2, a water outlet of the liquid cooling condenser 54 communicates with a port I of a three-way control valve 61 through a pipeline P5, and a water inlet of the liquid cooling condenser 54 communicates with a second communicating valve 62 through a pipeline P6. The third water pump 51 is arranged on the pipeline P6.

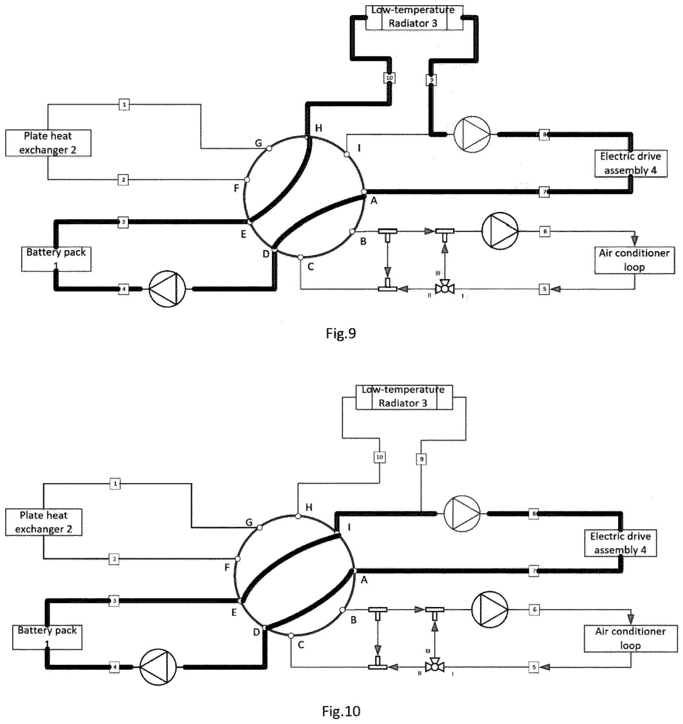

As shown in FIG. 9, the thermal management system provided by the invention has a fifth operating mode. The fourth connector E and the seventh connector H communicate. The third connector D and the ninth connector A communicate. Both heat exchange media in the battery pack 1 and in the electric drive assembly 4 flow into the low-temperature radiator 3 to perform cooling. Cooling of the battery pack 1 at a low temperature may be realized without passing through a compressor cooling loop.

As shown in FIG. 10, the thermal management system provided by the invention has a sixth operating mode. The fourth connector E and the eighth connector I communicate, the third connector D and the ninth connector A communicate, the battery pack1 is heated by utilizing waste heat of the electric drive assembly 4, so that the waste heat of the electric drive assembly 4 is fully utilized, and a utilization rate is increased.

Further, in the invention, the thermal management system includes a heat mixing module 6 (shown as a yellow line in FIG. 1) connected between the multi-way valve 10 and the air conditioner loop L5. The heat mixing module 6 and the multi-way valve 10 are together configured to: selectively enable all or part of a heat exchange medium in the air conditioner loop L5 to flow into other loops to perform a heat exchange. The "other loops" here may be any one of the battery pack loop L1, the plate heat exchanger loop L2, the low-temperature radiator loop L3, and the electric drive loop L4 other than the air conditioner loop L5, and will be described in detail in conjunction with the structure of the heat mixing module 6.

In an example of the invention, as shown in FIG. 1, the heat mixing module 6 includes the three-way control valve 61, a first communicating valve 62, the second communicating valve 63, and a third communicating valve 64 sequentially connected through pipelines. The first communicating valve 62, the second communicating valve 63, and the third communicating valve 64 may be three-way valves respectively. The three-way control valve 61 and the first communicating valve 62 are connected into the air conditioner loop L5, the second communicating valve 63 is connected to the first connector C of the multi-way valve 10, and the third communicating valve 64 is connected to the second connector B of the multi-way valve 10. In other examples, the heat mixing module 6 is not limited to four valves or to three-way valves and may be designed as needed.

The example shown in FIG. 1 is taken as an example, when a port I and a port III of the three-way control valve 61 communicate and a port II is cut off, the air conditioner loop L5 is circulated separately. Cooling or heating may be performed respectively, and a function of a heat pump is realized. When the port I and the port II of the three-way control valve 61 communicate and the port III is cut off, all the heat exchange medium in the air conditioner loop L5 flows into other loops through the heat mixing module 6 to perform a heat exchange. When all the port I, the port II, and the port III of the three-way control valve 61 communicate, part of the heat exchange medium in the air conditioner loop L5 flows into other loops through the heat mixing module 6 to perform a heat exchange. It may be selected not to be connected to the air conditioner loop L5 at all, to be connected to it completely, or to be connected to it partially as needed, so as to meet heat exchanger needs under different operating conditions.

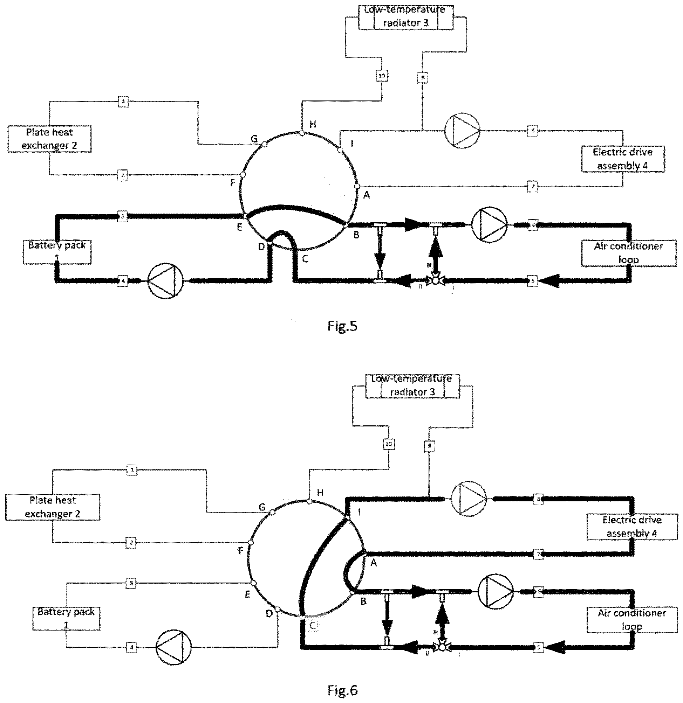

The interaction of the air conditioner loop L5 and the battery pack loop L1 in FIG. 5 is taken as an example, the heat mixing module 6 and the multi-way valve 10 are together configured to: selectively enable the heat exchange medium in the air conditioner loop L5 to flow into the battery pack loop L1, so that a temperature difference between heat exchange media in the air conditioner loop L5 and in the battery pack loop L1 is within a first predetermined range. The port II is a proportion of hot water that flows from the air conditioner loop L5 to the battery pack loop L1, and the heating of the battery pack 1 may be realized with the heat that enters the battery pack 1 through the port II, so that the controllability of the temperature of the battery pack 1 is realized. The heated hot water is returned to the air conditioner loop L5 to ensure the conservation of mass in the air conditioner loop L5 and the battery pack loop L1. The hot water that enters the battery pack loop L1 through the port II is mixed with a low-temperature coolant of the original battery pack loop and then enters the battery pack 1, so as to realize the control of the temperature difference between the air conditioner loop L5 and the battery pack loop L1.

The interaction of the air conditioner loop L5 and the electric drive loop L4 in FIG. 6 is taken as an example, the heat mixing module 6 and the multi-way valve 10 are together configured to: selectively enable the heat exchange medium in the air conditioner loop L5 to flow into the electric drive loop L4, so that a temperature difference between heat exchange media in the air conditioner loop L5 and in the electric drive loop L4 is within a second preset range. Similar to FIG. 5, the heat in the air conditioner loop L5 may be utilized to heat the electric drive assembly 4, which is mainly used for heat storage in the electric drive loop L4 at a low temperature to ensure the temperature of the electric drive assembly 4 and to promote the operation efficiency of the electric drive assembly 4.

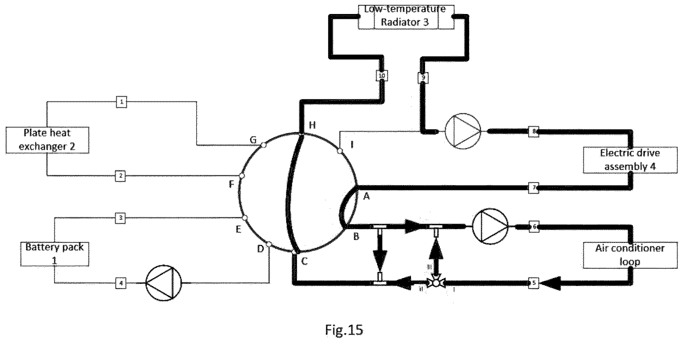

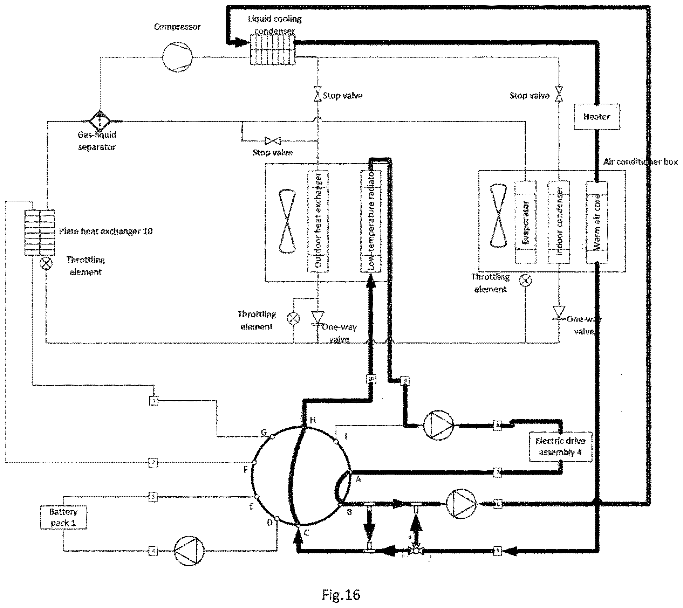

The interaction of the air conditioner loop L5 and the electric drive loop L4 in FIG. 15 and FIG. 16 is taken as an example, the multi-way valve 10 and the heat mixing module 6 are together configured to: selectively enable a heat exchange medium in the liquid cooling condenser 54 in the air conditioner loop L5 to flow into the low-temperature radiator loop L3. As shown in FIG. 16, the high-temperature high-pressure liquid refrigerant that flows out of the liquid cooling condenser 54 may enter the low-temperature radiator 3 in whole or in part through the port II to dissipate the heat. Especially in a high-temperature environment, when the air conditioner cooling cannot meet the requirements, the cooling efficiency of the air conditioner loop L5 may be improved by transferring the condensed heat of the air conditioner loop L5 to the low-temperature radiator 3.

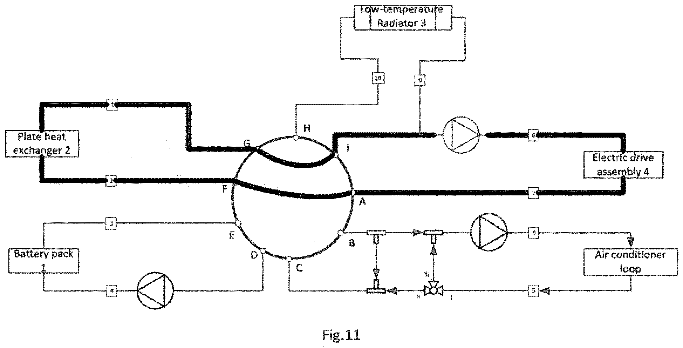

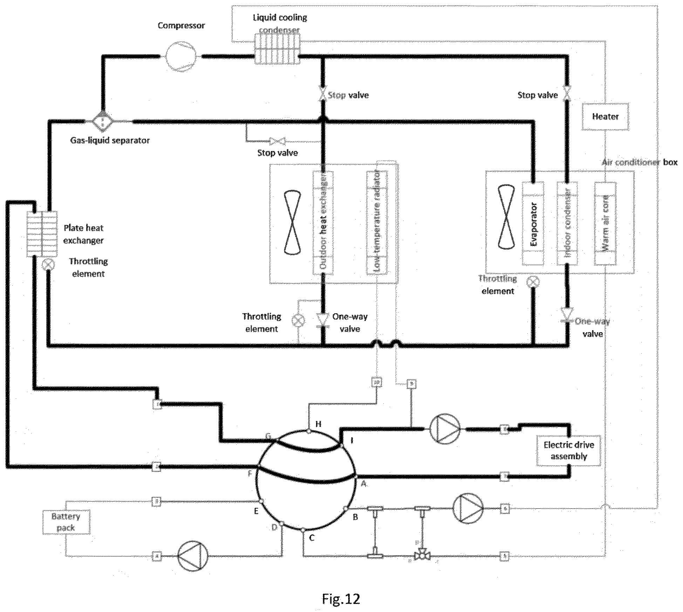

In order to improve the heat pump efficiency of the air conditioner loop, the amount of condensation of the liquid cooling condenser 54 may be selectively reduced, or the temperature of the heat exchange medium in the plate heat exchanger 2 may be increased. Based on the design idea, in an example of the invention, as shown in FIG. 11 and FIG. 12, the thermal management system provided by the invention has a seventh operating mode. The sixth connector E and the eighth connector I communicate, the fifth connector F and the ninth connector A communicate, and the heat of the electric drive assembly 4 is recovered by the plate heat exchanger 2. The heat of the electric drive assembly 4 is recovered by the plate heat exchanger 2 at a low temperature to enhance the performance of an air source heat pump.

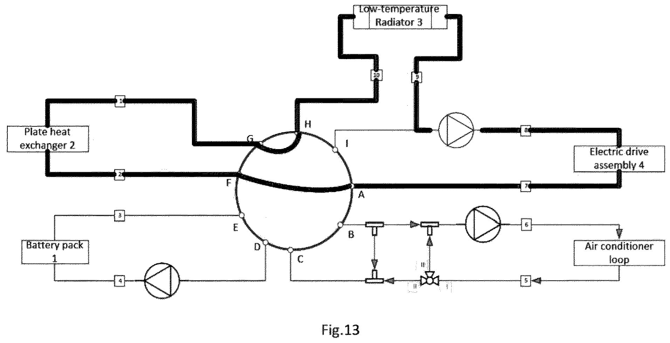

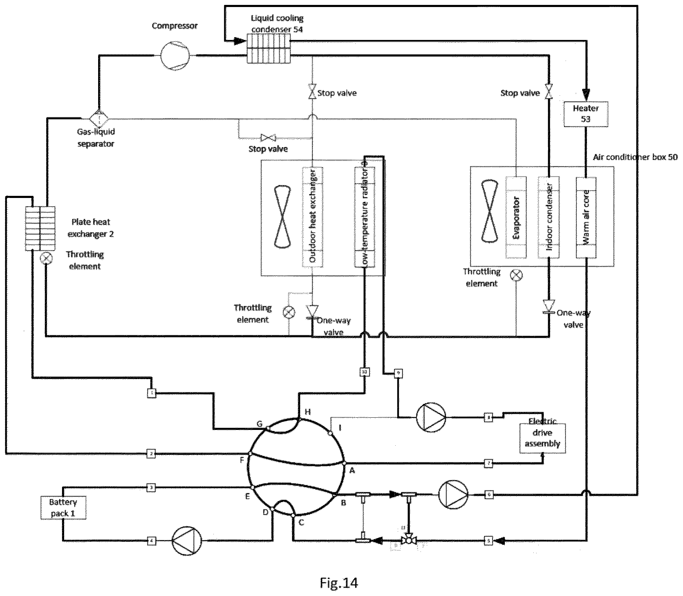

As an alternative example to the example shown in FIG. 11 and FIG. 12, as shown in FIG. 13 and FIG. 14, the thermal management system provided by the invention further has an eighth operating mode. The sixth connector G and the seventh connector H communicate, the fifth connector F and the ninth connector A communicate, and ambient heat absorbed by the low-temperature radiator 3 and/or waste heat of the electric drive assembly 4 are/is transferred to the plate heat exchanger 2. When the temperature is low but the ambient temperature is higher than the temperature of the heat exchange medium in the low-temperature radiator 3, the ambient heat may be absorbed by the low-temperature radiator 3 and transferred to the plate heat exchanger 2, as long as it is available, regardless of whether it is the low-temperature radiator 3 or the electric drive assembly 4, which may transfer the heat to the plate heat exchanger 2 and improve the performance of the heat pump.

Under a high-temperature operating condition, both the air conditioner and the battery pack 1 have large-load cooling needs, and a load on the condenser is large, so the efficiency of the whole system can be improved by improving the heat dissipation capacity of the liquid cooling condenser 54. In another example of the invention, as shown in FIG. 15 and FIG. 16, the thermal management system provided by the invention further has a ninth operating mode. The first connector C and the seventh connector H communicate. The second connector B and the ninth connector A communicate. A heat exchange medium of the electric drive assembly 4 flows into the low-temperature radiator 3 to perform cooling, and the heat exchange medium of the liquid cooling condenser 54 in the air conditioner loop L5 is selectively connected into the low-temperature radiator 3 to perform cooling. In the operating mode, the proportion of hot water that flows from the liquid cooling condenser 52 to the low-temperature radiator 3 is controlled by controlling the proportion of the port II, so that the condensed heat from the liquid cooling condenser 54 in the air conditioner loop may be transferred to the low-temperature radiator 3 in a high-temperature environment, and the low-temperature radiator 3 serves as a way to improve the cooling efficiency of the air conditioner loop. For example, the ninth operating mode and the second operating mode of FIG. 7 may coexist to simultaneously realize efficient cooling of the passenger compartment at a high temperature and the cooling effect of the electric drive assembly and the battery pack. In addition, in the ninth operating mode, operating conditions in spring and fall are taken into account, the air conditioner loop often operates in a defrosting mode, which needs to perform a process in which a temperature of the passenger compartment is reduced and then increased, and more heat is needed at this time. The condensed heat is recovered through the liquid cooling condenser 54, but there is a possibility that the recovered heat is greater than the needs. The heat may be released by transferring part of the heat to low-temperature heat radiator 3 through the heat mixing module 6. In a mid-temperature zone, an application range of the heat pump system is extended in spring and fall to realize the continuous use of the heat pump.

In order to meet the normal operating needs of the battery pack 1 at a low temperature, the thermal management system of the invention further has a tenth operating mode. The first connector C and the third connector D communicate, the fourth connector E and the second connector B communicate, the fifth connector F and the ninth connector A communicate, and the sixth connector G and the eighth connector I communicate. Heat generated by the electric drive assembly 4, the compressor 55 and the heater 53 of the air conditioner loop L5 are transferred to the battery pack 1. In the tenth operating mode, the heat of the electric drive assembly 4 is recovered through the plate heat exchanger 2 to generate heat for an electric drive locked rotor. The heat of both the compressor 55 and the heater 53 is transferred to the battery pack 1 through the heat mixing module 6. The heating of the battery pack 1 by the three heat sources is realized, so that the normal operation of the battery pack 1 at the low temperature is ensured, the heating rate of the battery pack 1 at the low temperature is improved, and the charging speed of the battery pack 1 is improved at the same time.

In the invention, the multi-way valve 10 includes the shell and the valve spool arranged in the shell. The plurality of connectors A, B, C, D, E, F, G, H, and I are formed on the shell, and the valve spool is capable of rotating to connect at least two connectors. That is, a single motor drive mode may be used, in which the valve spool is driven to rotate by the motor so as to connect the two or more connectors above respectively.

In the invention, the water pumps are used as power sources in a cooling loop. In order to promote the integration level of the system, a runner plate is designed to serve as a carrier for the water valve and the water pumps. A water pump volute and the runner plate are designed to be integrated to reduce the number of pipelines.

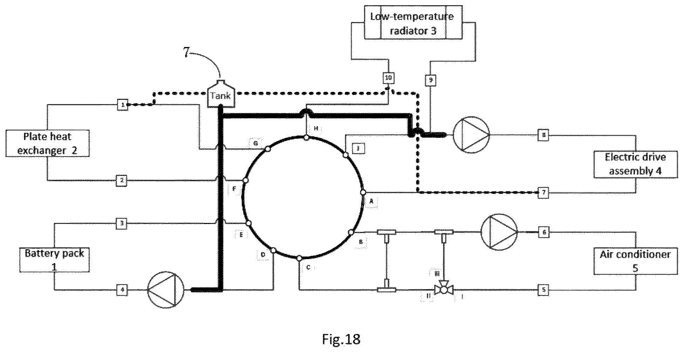

In the invention, liquid replenishment loops of the loops of the battery pack 1, the electric drive assembly 4, the low-temperature radiator 3, and the plate heat exchanger 2 are designed in an integrated mode. As shown in FIG. 18, the thermal management system provided by the invention further includes a storage tank 7, and at least one liquid replenishment pipeline (shown as a black, thickened, and solid line in FIG. 18) and/or at least one gas replenishment pipeline (shown as a dashed line in FIG. 18) connected to storage tank 7. The plurality of liquid replenishment pipelines are connected to the same storage tank 7 and share a liquid replenishment opening. Two liquid replenishment pipelines may be arranged, a water outlet of the first liquid replenishment pipeline is connected to an inlet of the first water pump 11, and a water outlet of the second liquid replenishment pipeline is connected upstream of the second water pump 41. Two gas replenishment pipelines may be arranged, a gas outlet of the first gas replenishment pipeline is connected to an outlet of the electric drive assembly 4, and a gas outlet of the second gas replenishment pipeline is connected to an outlet of the plate heat exchanger 2.

According to a second aspect of the invention, an electric device is further provided, and includes the thermal management system as described above. The electric device may be a vehicle, an unmanned aerial vehicle, an energy storage system, etc., and has all of the beneficial effects of the thermal management system described above, which will not be described extensively here. The thermal management system provided by the invention may achieve a low-temperature heating capacity of 18.5 kW, and the condensed heat in spring and fall may be recovered by the heat mixing module 6, which substantially reduces the energy consumption of the air conditioner.

Other implementation solutions of the invention will be apparent to those skilled in the art from consideration of the specification and practice of the invention. The invention is intended to cover any variations, uses, or adaptations of the invention that follow the general principles of the invention and include common knowledge or customary technical means in the art not disclosed in the invention.

It is to be understood that the invention is not limited to the exact construction that has been described above and illustrated in the accompanying drawings, and that various modifications and changes may be made without departing from its scope. The scope of the invention is merely limited by the appended claims.

## Claims

1. A thermal management system, comprising:
a multi-way valve (10); and
a battery pack loop (L1), a plate heat exchanger loop (L2), a low-temperature radiator loop (L3),
an electric drive loop (L4), and an air conditioner loop (L5) respectively connected to different connectors (A, B, C, D, E, F, G, H, and I) of the multi-way valve (10), wherein
at least two of the different connectors (A, B, C, D, E, F, G, H, and I) of the multi-way valve (10) are selectively communicated to perform a heat exchange of heat exchange media between at least two of the battery pack loop (L1), the plate heat exchanger loop (L2), the low-temperature radiator loop (L3), the electric drive loop (L4), and the air conditioner loop (L5), or perform a heat homogenization of a heat exchange medium of one of the battery pack loop (L1), the plate heat exchanger loop (L2), the low-temperature radiator loop (L3), the electric drive loop (L4), and the air conditioner loop (L5).

2. The thermal management system according to claim 1, comprising a heat mixing module (6) connected between the multi-way valve (10) and the air conditioner loop (L5),
wherein the heat mixing module (6) and the multi-way valve (10) are together configured to:
selectively enable all or part of a heat exchange medium in the air conditioner loop (L5) to flow into other loops to perform a heat exchange; or
wherein the heat mixing module (6) and the multi-way valve (10) are together configured to: selectively enable the heat exchange medium in the air conditioner loop (L5) to flow into the battery pack loop (L1), so that a temperature difference between heat exchange media in the air conditioner loop (L5) and in the battery pack loop (L1) is within a first predetermined range; or wherein the heat mixing module (6) and the multi-way valve (10) are together configured to: selectively enable the heat exchange medium in the air conditioner loop (L5) to flow into the electric drive loop (L4), so that a temperature difference between heat exchange media in the air conditioner loop (L5) and in the electric drive loop (L4) is within a second preset range; or wherein the multi-way valve (10) and the heat mixing module (6) are together configured to: selectively enable a heat exchange medium in a liquid cooling condenser (54) in the air conditioner loop (L5) to flow into the low-temperature radiator loop (L3).

3. The thermal management system according to claim 1 or 2, wherein the heat mixing module (6) comprises a three-way control valve (61), a first communicating valve (62), a second communicating valve (63), and a third communicating valve (64) connected sequentially through pipelines, the first communicating valve (62), the second communicating valve (63), and the third communicating valve (64) are three-way valves respectively, the three-way control valve (61) and the first communicating valve (62) are connected into the air conditioner loop (L5), the second communicating valve (63) is connected to the first connector (C) of the multi-way valve (10), and the third communicating valve (64) is connected to the second connector (B) of the multi-way valve (10).

4. The thermal management system according to claim 3, wherein
the air conditioner loop (L5) is circulated separately when a port I and a port III of the three-way control valve (61) communicate and a port II is cut off;
all the heat exchange media in the air conditioner loop (L5) flow into other loops through the heat mixing module (6) to perform a heat exchange when the port I and the port II of the three-way control valve (61) communicate and the port III is cut off; and
part of the heat exchange medium in the air conditioner loop (L5) flows into other loops through the heat mixing module (6) to perform a heat exchange when all the port I, the port II, and the port III of the three-way control valve (61) communicate.

5. The thermal management system according to claim 3 or 4, wherein the multi-way valve (10) has a third connector (D) and a fourth connector (E), the battery pack loop (L1) comprises a battery pack (1), a pipeline (P3) for connecting the fourth connector (E) and the battery pack (1), and a pipeline (P4) for connecting the third connector (D) and the battery pack (1), and a first water pump (11) is further arranged in the battery pack loop (L1).

6. The thermal management system according to claim 5, wherein the multi-way valve (10) has a fifth connector (F) and a sixth connector (G), and the plate heat exchanger loop (L2) comprises a plate heat exchanger (2), a pipeline (P2) for connecting the fifth connector (F) and the plate heat exchanger (2), and a pipeline (P1) for connecting the sixth connector (G) and the plate heat exchanger(2).

7. The thermal management system according to claims 6, having at least one of the following operating modes:
a first operating mode, wherein the third connector (D) and the fourth connector (E) communicate, and heat homogenization is performed by a heat exchange medium in the battery pack (1); or
a second operating mode, wherein the third connector (D) and the sixth connector (G) communicate, the fourth connector (E) and the fifth connector (F) communicate, and the heat exchange medium in the battery pack (1) flows into the plate heat exchanger (2) to dissipate heat and then flows back to the battery pack (1).

8. The thermal management system according to claim 6 or 7, wherein the multi-way valve (10) has a seventh connector (H) and an eighth connector (I), and the low-temperature radiator loop (L3) comprises a low-temperature radiator (3), a pipeline (P10) for connecting the seventh connector (H) and the low-temperature radiator (3), and a pipeline (P9) for connecting the eighth connector (I) and the low-temperature radiator (3).

9. The thermal management system according to claim 8, wherein the multi-way valve (10) is a nine-way valve, the battery pack loop (L1), the plate heat exchanger loop (L2), and the air conditioner loop (L5) are each connected to two connectors of the nine-way valve, and the low-temperature radiator loop (L3) and the electric drive loop (L4) are each connected to one connector of the nine-way valve and share one connector.

10. The thermal management system according to claim 9, wherein the multi-way valve (10) has a ninth connector (A), the electric drive loop (L4) comprises an electric drive assembly (4), a pipeline (P7) for connecting the ninth connector (A) and the electric drive assembly (4), and a pipeline (P8) for connecting the electric drive assembly (4) to the pipeline (P9), and a second water pump (41) is further arranged in the electric drive loop (L4).

11. The thermal management system according to claim 10, wherein the air conditioner loop (L5) comprises a compressor (55), the liquid cooling condenser (54), a heater (53), an air conditioner box (50), and the plate heat exchanger (2), a water outlet of the liquid cooling condenser (54) communicates with a or the port I of the three-way control valve (61) through a pipeline (P5), a water inlet of the liquid cooling condenser (54) communicates with the second communicating valve (62) through a pipeline (P6), and a third water pump (51) is further arranged in the air conditioner loop (L5).

12. The thermal management system according to claim 10 or 11, having at least one of the following operating modes:
a third operating mode, wherein the ninth connector (A) and the eighth connector (I) communicate, and heat homogenization is performed by a heat exchange medium in the electric drive assembly (4);
a fourth operating mode, wherein the ninth connector (A) and the seventh connector (H) communicate, and the heat exchange medium in the electric drive assembly (4) flows into the low-temperature radiator (3) to dissipate heat and then flows back to the electric drive assembly (4);
a fifth operating mode, wherein the fourth connector (E) and the seventh connector (H) communicate, the third connector (D) and the ninth connector (A) communicate, and heat exchange media in the battery pack (1) and in the electric drive assembly (4) both flow into the low-temperature radiator (3) to perform cooling;
a sixth operating mode, wherein the fourth connector (E) and the eighth connector (I) communicate, the third connector (D) and the ninth connector (A) communicate, and the battery pack (1) is heated by waste heat of the electric drive assembly (4);
a seventh operating mode, wherein the sixth connector (E) and the eighth connector (I) communicate, the fifth connector (F) and the ninth connector (A) communicate, and heat of the electric drive assembly (4) is recovered by the plate heat exchanger (2);
an eighth operating mode, wherein the sixth connector (G) and the seventh connector (H) communicate, the fifth connector (F) and the ninth connector (A) communicate, and both ambient heat absorbed by the low-temperature radiator (3) and waste heat of the electric drive assembly (4) are transferred to the plate heat exchanger (2);
a ninth operating mode, wherein the first connector (C) and the seventh connector (H) communicate, the second connector (B) and the ninth connector (A) communicate, a heat exchange medium of the electric drive assembly (4) flows into the low-temperature radiator (3) to perform cooling, and the heat exchange medium of the liquid cooling condenser (54) in the air conditioner loop (L5) is selectively connected into the low-temperature radiator (3) to perform cooling;
a tenth operating mode, wherein the first connector (C) and the third connector (D) communicate, the fourth connector (E) and the second connector (B) communicate, the fifth connector (F) and the ninth connector (A) communicate, the sixth connector (G) and the eighth connector (I) communicate, and heat generated by the electric drive assembly (4), the compressor (55) and the heater (53) of the air conditioner loop (L5) are transferred to the battery pack (1).

13. The thermal management system according to any one of claims 1 to 12, wherein the multi-way valve (10) comprises a shell and a valve spool arranged in the shell, the plurality of connectors (A, B, C, D, E, F, G, H, and I) are formed on the shell, and the valve spool is capable of rotating to connect at least two of the connectors.

14. The thermal management system according to any one of claims 1 to 13, further comprising a storage tank (7), and at least one liquid replenishment pipeline and/or at least one gas replenishment pipeline connected to the storage tank (7); optionally,
wherein the two liquid replenishment pipelines are arranged, a water outlet of the first liquid replenishment pipeline is connected to an inlet of a first water pump (11) in the battery pack loop (L1), and a water outlet of the second liquid replenishment pipeline is connected upstream of a second water pump (41) in the electric drive loop (L4); or
wherein two gas replenishment pipelines are arranged, a gas outlet of the first gas replenishment pipeline is connected to an outlet of an electric drive assembly (4) in the electric drive loop (L4), and a gas outlet of the second gas replenishment pipeline is connected to an outlet of a plate heat exchanger (2) in the plate heat exchanger loop (L2); or
wherein the plurality of loops are respectively formed by runners of a runner plate, and the liquid replenishment pipeline and/or the gas replenishment pipeline are/is formed by part of the runners of the runner plate.

15. An electric device, comprising the thermal management system according to any one of claims 1-14.
